# EUROPEAN PATENT SPECIFICATION

(11) **EP 3 112 979 B1**
(45) Date of publication and mention of the grant of the patent: **17.06.2020**
(21) Application number: 16161816.0
(22) Date of filing: 23.03.2016
(51) Int. Cl.: G06F 1/32, H04W 52/02

(54) **METHOD AND DEVICE FOR WAKING UP MCU**
VERFAHREN UND VORRICHTUNG ZUM AUFWECKEN EINER MIKRO-STEUEREINHEIT (MCU)
PROCÉDÉ ET DISPOSITIF POUR RÉVEILLER UNE MCU

(30) Priority: 01.07.2015 CN 201510379727
(43) Date of publication of application: 04.01.2017
(73) Proprietor: Xiaomi Inc., Beijing 100085 (CN)
(72) Inventor: MENG, Deguo, Beijing 100085 (CN); DING, Yi, Beijing 100085 (CN); HOU, Enxing, Beijing 100085 (CN)
(74) Representative: Cabinet Beau de Loménie

(56) References cited:
- EP-A2- 0 562 885
- US-A1- 2012 249 431

## Description

### FIELD

The present disclosure relates to an intelligent device technology field, and more particularly to a method and a device for waking up a Microcontroller Unit MCU.

### BACKGROUND

With the development of intelligent devices, an energy consumption control becomes more and more strict. Therefore, it is required to control a MCU to get into a deep sleep state at idle, thus reducing the energy consumption of the intelligent device.

When there is a need to execute a process, a system will send a wake-up signal to the MCU via a specified pin in the MCU, so as to wake up the MCU. However, when multiple MCUs work cooperatively in the intelligent device, if a MCU is in the deep sleep state, other MCUs cannot communicate with it, until the MCU in the deep sleep state is woken up.

Document EP 0 562 885 A2 discloses a microprocessor with hardware controlled power management and selectable input/output control pins.

### SUMMARY

In order to solve problems in the related art, the present disclosure provides a method and a device for waking up a MCU. The technical solutions are as follows.

According to embodiment of a first aspect of the present disclosure, a method for waking up a MCU is provided, and the method includes:
determining whether a second MCU is in a deep sleep state, when a first MCU triggers a communication event of transmitting data to the second MCU; and
if the second MCU is in the deep sleep state, sending a wake-up signal to the second MCU via a wake-up pin connected between the first MCU and the second MCU, so as to wake up the second MCU.

Determining whether a second MCU is in a deep sleep state includes:
detecting a pre-stored state parameter of the second MCU, in which the pre-stored state parameter of the second MCU is determined according to a first state updating message sent by the second MCU; and
if the pre-stored state parameter of the second MCU indicates a deep sleep state, determining that the second MCU is in the deep sleep state.

Alternatively, determining whether a second MCU is in a deep sleep state includes:
sending a detecting message to the second MCU via a communication interface between the first MCU and the second MCU; and
if no response message returned from the second MCU is received within a preset period, determining that the second MCU is in a deep sleep state.

Further aspects include after sending a wake-up signal to the second MCU so as to wake up the second MCU, the method further includes:
receiving a second state updating message sent by the second MCU, in which a state parameter carried in the second state updating message indicates a working state; and
determining that the second MCU has been woken up according to the second state updating message, and transmitting data to the second MCU via a communication interface between the first MCU and the second MCU.

Alternatively, after receiving a second state updating message sent by the second MCU, the method further includes:
updating the pre-stored state parameter of the second MCU according to the state parameter carried in the second state updating message.

According to embodiments of a second aspect of the present disclosure, a device for waking up a MCU is provided, and the device includes:
a determining module, configured to determine whether a second MCU is in a deep sleep state, when a first Microcontroller Unit MCU triggers a communication event of transmitting data to the second MCU; and
a wake-up module, configured to send a wake-up signal to the second MCU via a wake-up pin connected between the first MCU and the second MCU if the second MCU is in the deep sleep state, so as to wake up the second MCU.

Moreover the determining module includes:
a detecting unit, configured to detect a pre-stored state parameter of the second MCU, in which the pre-stored state parameter of the second MCU is determined according to a first state updating message sent by the second MCU; and
a first determining unit, configured to determine that the second MCU is in a deep sleep state, if the pre-stored state parameter of the second MCU indicates the deep sleep state.

Alternatively, the determining module includes:
a sending unit, configured to send a detecting message to the second MCU via a communication interface between the first MCU and the second MCU; and
a second determining unit, configured to determine that the second MCU is in a deep sleep state ,if no response message returned from the second MCU is received within a preset period.

The device further includes:
a receiving module, configured to receive a second state updating message sent by the second MCU, in which a state parameter carried in the second state updating message indicates a working state; and
a transmitting module, configured to determine that the second MCU has been woken up according to the second state updating message, and to transmit data to the second MCU via a communication interface between the first MCU and the second MCU.

Alternatively, the device further includes:
an updating module, configured to update the pre-stored state parameter of the second MCU according to the state parameter carried in the second state updating message.

According to embodiments of a third aspect of the present disclosure, a device for waking up a MCU is provided, and the device includes:
a processor; and
a memory, configured to store instructions executable by the processor,
wherein, the processor is configured to execute the instructions corresponding to the steps of the method previously described.

The advantages and features of the devices according to the embodiments of the present disclosure are the same with those of the above described method and will not be repeated here.

Alternatively, the steps of the method for waking up a Microcontroller Unit MCU are determined by computer program instructions.

Consequently, according to a fourth aspect, the invention is also directed to a computer program for executing the steps of the method for waking up a Microcontroller Unit MCU as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in the present disclosure may have the following beneficial effects.

By sending the wake-up signal to the second MCU via the wake-up pin connected between the first MCU and the second MCU, the MCU in the deep sleep state may be woken up through an external interrupt event flexibly triggered by the second MCU, without waiting for, as conventionally does in the prior art, an inner interrupt event predetermined in the first MCU itself, thus improving the efficiency of communication between the two MCUs and enhancing the performance of the intelligence device that functions with these MCUs cooperating with each other to carry out tasks.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for waking up a MCU according to an exemplary embodiment;
Fig. 2 is a flow chart of a method for waking up a MCU according to an exemplary embodiment;
Fig. 3 is a flow chart of a method for waking up a MCU according to an exemplary embodiment;
Fig. 4 is a flow chart of a method for waking up a MCU according to an exemplary embodiment;
Fig. 5 is a block diagram of a device for waking up a MCU according to an exemplary embodiment;
Fig. 6 is a block diagram of a determining module in a device for waking up a MCU according to an exemplary embodiment; and
Fig. 7 is a schematic diagram of a device for waking up a MCU (a general structure of an intelligent device) according to an exemplary embodiment.

### DETAILED DESCRIPTION

In order to make objectives, technical solutions and advantages of the present disclosure clearer, exemplary embodiments will be described in detail herein with reference to accompanying drawings.

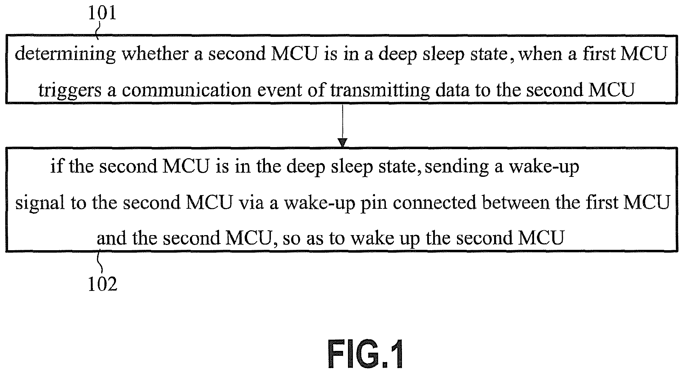

In an exemplary embodiment of the present disclosure, a method for waking up a MCU is provided, which is implemented by an intelligent device that comprises a first MCU and a second MCU, and as shown in Fig. 1, the method includes following steps.

In step 101, it is determined whether the second MCU is in a deep sleep state, when the first MCU triggers a communication event of transmitting data to the second MCU.

In step 102, if the second MCU is in the deep sleep state, a wake-up signal is sent to the second MCU via a wake-up pin (e.g., a pin dedicated to transfer the wake-up signal is referred as a "wake-up pin") connected between the first MCU and the second MCU, so as to wake up the second MCU.

Alternatively, determining whether a second MCU is in a deep sleep state includes:
detecting a pre-stored state parameter of the second MCU, in which the pre-stored state parameter of the second MCU is determined according to a first state updating message sent by the second MCU; and
if the pre-stored state parameter of the second MCU indicates the deep sleep state, determining that the second MCU is in the deep sleep state.

Alternatively, determining whether a second MCU is in a deep sleep state includes:
sending a detecting message to the second MCU via a communication interface between the first MCU and the second MCU; and
if no response message returned from the second MCU is received within a preset period, determining that the second MCU is in the deep sleep state.

Alternatively, after sending a wake-up signal to the second MCU so as to wake up the second MCU, the method further includes:
receiving a second state updating message sent by the second MCU, in which a state parameter carried in the second state updating message indicates a working state; and
determining that the second MCU has been woken up according to the second state updating message, and transmitting data to the second MCU via a communication interface between the first MCU and the second MCU.

Alternatively, after receiving a second state updating message sent by the second MCU, the method further comprises:
updating the pre-stored state parameter of the second MCU according to the state parameter carried in the second state updating message.

In embodiments of the present disclosure, by sending the wake-up signal to the second MCU via the wake-up pin connected between the first MCU and the second MCU, the MCU in the deep sleep state (e.g. the second MCU) may be woken up by other MCUs (e.g. the first MCU) through triggering an external interrupt event (e.g. sending the wake-up signal), without, as in the prior art, waiting for an inner interrupt event (e.g. waiting for the expiration of a timer) in the MCU under the deep sleep state, thus improving the efficiency of communication between MCUs and enhancing the performance of the intelligence device that functions with multiple MCUs cooperating with each other to carry out tasks.

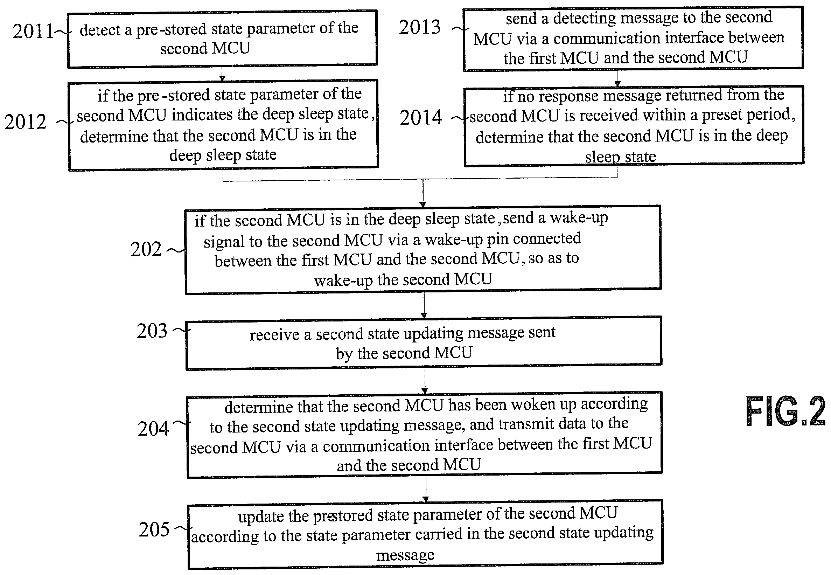

In an exemplary embodiment of the present disclosure, a method for waking up a MCU is provided, which is implemented by an intelligent device that comprises a first MCU and a second MCU, and as shown in Fig. 2, the method includes following steps.

In step 201, it is determined whether a second MCU is in a deep sleep state, when the first MCU triggers a communication event of transmitting data to the second MCU.

Specifically, it may be determined whether the second MCU is in a deep sleep state in two variants, and accordingly, the step 201 may include following steps.

### Variant 1:

In step 2011, a pre-stored state parameter of the second MCU is detected, in which the pre-stored state parameter of the second MCU is determined according to a first state updating message sent by the second MCU.

In step 2012, if the pre-stored state parameter of the second MCU indicates the deep sleep state, it is determined that the second MCU is in the deep sleep state.

### Variant 2:

In step 2013, a detecting message is sent to the second MCU via a communication interface between the first MCU and the second MCU.

In step 2014, if no response message returned from the second MCU is received within a preset period, it is determined that the second MCU is in the deep sleep state.

In step 202, if the second MCU is in the deep sleep state, a wake-up signal is sent to the second MCU via a wake-up pin connected between the first MCU and the second MCU, so as to wake up the second MCU.

In step 203, a second state updating message sent by the second MCU is received, in which a state parameter carried in the second state updating message indicates a working state.

In step 204, it is determined that the second MCU has been woken up according to the second state updating message, and data is transmitted to the second MCU via a communication interface between the first MCU and the second MCU.

In step 205, the pre-stored state parameter of the second MCU is updated according to the state parameter carried in the second state updating message.

Alternatively, step 205 is a step following the step of determining whether the second MCU is in the deep sleep state in the first variant. Alternatively, step 205 may not be performed after the step of determining whether the second MCU is in the deep sleep state in the second variant.

In the embodiment of the present disclosure, by sending the wake-up signal to the second MCU via the wake-up pin connected between the first MCU and the second MCU, the MCU in the deep sleep state may be woken up by other MCUs through triggering an external interrupt event, without waiting for an inner interrupt event in the MCU under the deep sleep state, thus improving the efficiency of communication between MCUs and enhancing the performance of the intelligence device that functions with multiple MCUs cooperating with each other to carry out tasks.

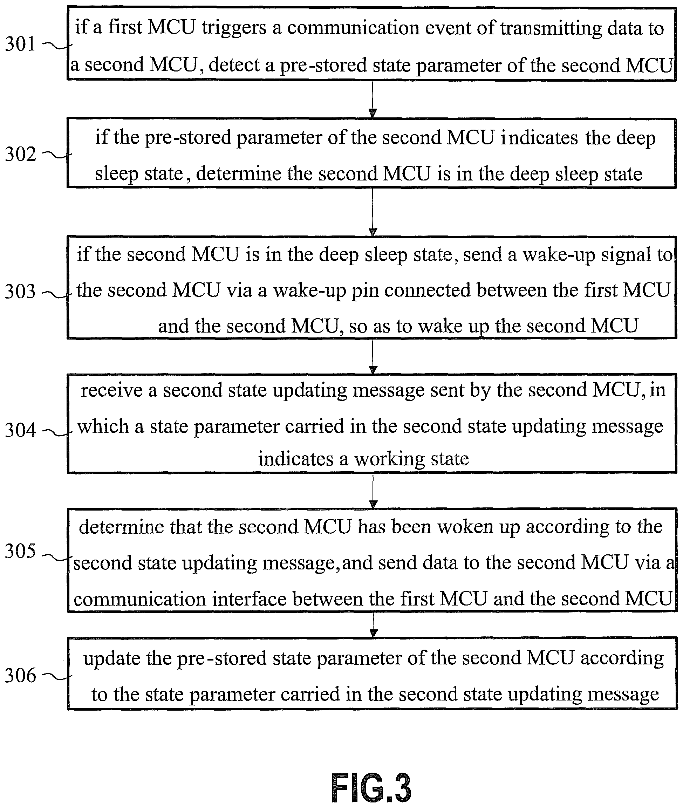

In an exemplary embodiment of the present disclosure, a method for waking up a MCU is provided, which is implemented by an intelligent device, and as shown in Fig. 3, the method includes following steps.

In step 301, if a first MCU triggers a communication event of transmitting data to a second MCU, a pre-stored state parameter of the second MCU is detected, in which the pre-stored state parameter of the second MCU is determined according to a first state updating message sent by the second MCU.

In the embodiment of the present disclosure, the first MCU determines whether the second MCU is in a deep sleep state according to a pre-stored state parameter of the second MCU stored in a register (e.g. a memory) of the first MCU, in which, a parameter list storing the state parameter of each MCU of an intelligent device is configured in the register of the first MCU.

When entering the deep sleep state (e.g. idle state) or switching to a working state (e.g. active state) from the deep sleep state, the MCU in the intelligent device sends a state updating message to other MCUs via a communication interface connected between the MCU itself and the other MCUs, so as to inform the other MCUs of its state, in which, the state parameter carried in the state updating message may indicate a deep sleep state or a working state, but the present disclosure is not limited to this.

Before triggering a communication event of transmitting data to the second MCU, the first MCU may check the state parameter of the second MCU in the locally stored parameter list, and then determine whether to perform a wake-up procedure according to the checked out state parameter.

In step 302, if the pre-stored parameter of the second MCU indicates a deep sleep state, it is determined that the second MCU is in a deep sleep state.

Specifically, if the state parameter indicates a deep sleep state, the second MCU is woken up by performing the wake-up procedure in the embodiment of the present disclosure, and then a communication procedure is performed between the woken up MCU (e.g. the second MCU) and other MCUs.

In step 303, if the second MCU is in the deep sleep state, a wake-up signal is sent to the second MCU via a wake-up pin connected between the first MCU and the second MCU, so as to wake up the second MCU.

Specifically, the wake-up pin is connected between the first MCU and the second MCU, such that the wake-up signal may be sent to the second MCU via the wake-up pin connected between the two MCUs when the second MCU is in the deep sleep state, thus waking up this MCU via an interrupt event triggered from the first MCU that is outside of the second MCU when there is a need to execute a task. Alternatively, the second MCU can also be woken up via an inner interrupt event triggered by the second MCU itself.

In step 304, a second state updating message sent by the second MCU is received, in which a state parameter carried in the second state updating message indicates a working state.

Specifically, a communication interface is also connected between the first MCU and the second MCU, in which the communication interface may be for example a serial port, an Inter-Integrated Circuit I2C interface, a Serial Peripheral Interface SPI, and etc. Communication in the form of, for example, sending data (e.g. data used to perform a task or process in cooperation with other MCUs) and sending the state updating message may be performed via the communication interface.

After the second MCU is woken up by the external wake-up message from the first MCU, the second MCU sends a state updating message to the first MCU via the communication interface, in which the state parameter carried in the state updating message indicates the working state.

In step 305, it is determined that the second MCU has been woken up according to the second state updating message, and data (e.g. data used to perform a task or process in cooperation with the second MCU) is transmitted to the second MCU via the communication interface between the first MCU and the second MCU.

After receiving the state updating message from the second MCU, the first MCU obtains the working state of the second MCU by analyzing the state parameter carried in the state updating message, and then transmits the data to the second MCU.

In step 306, the pre-stored state parameter of the second MCU is updated according to the state parameter carried in the second state updating message.

Alternatively, the step 306 of updating the pre-stored state parameter of the second MCU stored in the parameter list may be performed after step 304, before, at the same time with, or after the step 305.

In the embodiment of the present disclosure, by sending the wake-up signal to a MCU via the wake-up pin connected between this MCU and another MCU, the MCU in the deep sleep state may be woken up through an external interrupt event flexibly triggered by another MCU, without waiting for an inner interrupt event predetermined in the MCU under the deep sleep state, thus improving the efficiency of communication between MCUs and enhancing the performance of the intelligence device that functions with multiple MCUs cooperating with each other to carry out tasks.

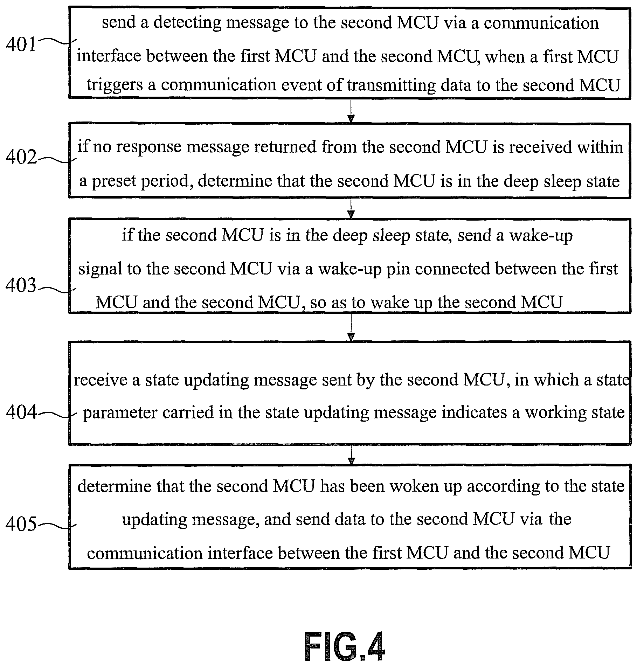

In an exemplary embodiment of the present disclosure, a method for waking up a MCU is provided, which is implemented by an intelligent device, and as shown in Fig. 4, the method includes following steps.

In step 401, a detecting message is sent to the second MCU via a communication interface between a first MCU and the second MCU, when the first MCU triggers a communication event of transmitting data to the second MCU.

In this embodiment of the present disclosure, a register of the first MCU may not store a parameter list. Thus, when the first MCU wishes to determine the state of the second MCU, it sends a detecting message to the second MCU, so as to determine whether the second MCU is in the deep sleep state.

In step 402, if no response message returned from the second MCU is received within a preset period, it is determined that the second MCU is in the deep sleep state.

If the second MCU is in a working state, it will return a response message when receiving the detecting message sent from the first MCU, such that the first MCU may determine that the second MCU is in the working state according to the response message.

If the second MCU is in a deep sleep state, it will not receive the detecting message and thus will not return the response message, i.e., step 402 will be performed. Here, the second MCU is not able to receive the detecting message because its communication interface is inactive due to the deep sleet state and thus does not transfer data to the second MCU.

Accordingly, when determining that the second MCU is in the deep sleep state, the first MCU will perform a wake-up procedure, and perform a communication procedure after the second MCU is woken up.

In step 403, if the second MCU is in a deep sleep state, a wake-up signal is sent to the second MCU via a wake-up pin connected between the first MCU and the second MCU, so as to wake up the second MCU.

Specifically, the wake-up pin is connected between the first MCU and the second MCU, such that the wake-up signal may be sent to the second MCU via the wake-up pin connected between the two MCUs when the second MCU is in the deep sleep state, thus waking up the MCU via an interrupt event triggered the first MCU that is outside of the second MCU when there is a need to execute a task. Alternatively, the second MCU can also be woken up via an inner interrupt event triggered by the second MCU itself.

In step 404, a state updating message sent by the second MCU is received, in which a state parameter carried in the state updating message indicates a working state.

Specifically, a communication interface is also connected between the first MCU and the second MCU, in which the communication interface may be for example a serial port, an Inter-Integrated Circuit I2C interface, a Serial Peripheral Interface SPI, and etc. Communication in the form of, for example, sending data (e.g. data used to perform a task or process in cooperation with other MCUs) and sending the state updating message may be performed via the communication interface.

After the second MCU is woken up by the external wake-up message from the first MCU, the second MCU sends the state updating message to the first MCU via the communication interface, in which the state parameter carried in the state updating message indicates the working state.

In step 405, it is determined that the second MCU has been woken up according to the state updating message, and data (e.g. data used to perform a task or process in cooperation with the second MCU) is transmitted to the second MCU via the communication interface between the first MCU and the second MCU.

In the embodiment of the present disclosure, the first MCU determines that the second MCU is woken up according to the state parameter in the state updating message sent by the second MCU, and thus transmits the data to the second MCU.

Alternatively, in another embodiment of the present disclosure, if one of the first MCU and the second MCU is controlled to get into the deep sleep state, it may not send the state updating message to the other MCU. Instead, when the MCU is woken up via an external wake-up signal, it sends the state updating message to the other MCU, so as to inform the other MCU that communication procedure may be performed.

Thus, in the embodiment of the present disclosure, there is no need to save the state parameter according to the state updating message.

In the embodiment of the present disclosure, by sending the wake-up signal to the second MCU via the wake-up pin connected between the first MCU and the second MCU, the MCU in the deep sleep state may be woken up through an external interrupt event flexibly triggered by the second MCU, without waiting for an inner interrupt event predetermined in the first MCU itself, thus improving the efficiency of communication between the two MCUs and enhancing the performance of the intelligence device that functions with these MCUs cooperating with each other to carry out tasks.

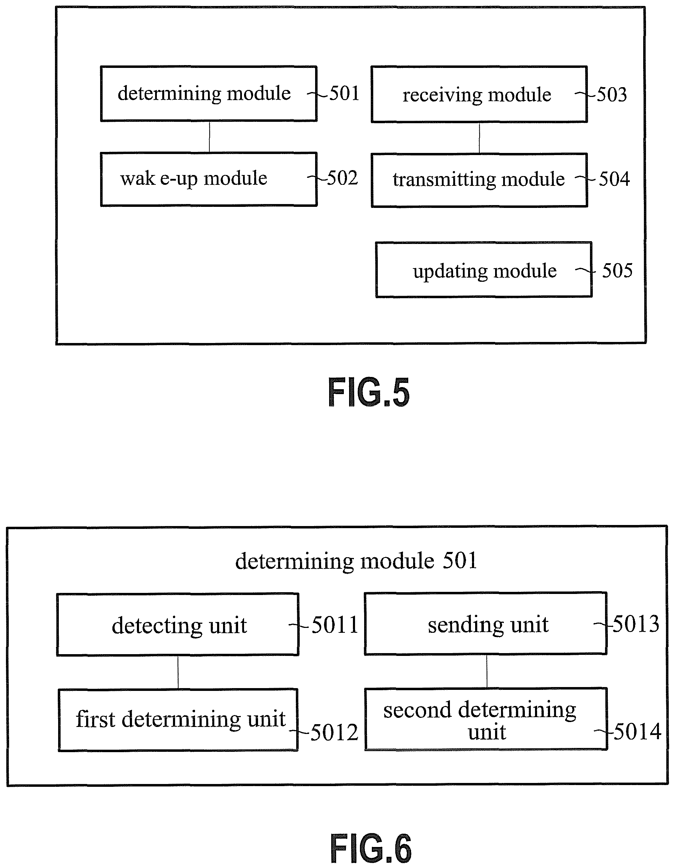

Corresponding to the method of waking up a MCU in the above exemplary embodiment of the present disclosure, a device for waking up a MCU is provided in another exemplary embodiment of the present disclosure, which is implanted as an intelligent device and comprises a first MCU and a second MCU, and as shown in Fig. 5, the device includes a determining module 501and a wake-up module 502.

The determining module 501 is configured to determine whether a second MCU is in a deep sleep state, when a first MCU triggers a communication event of transmitting data to the second MCU.

The wake-up module 502 is configured to send a wake-up signal to the second MCU via a wake-up pin connected between the first MCU and the second MCU if the second MCU is in the deep sleep state, so as to wake up the second MCU.

As shown in Fig. 6, the determining module 501 includes a detecting unit 5011 and a first determining unit 5012.

The detecting unit 5011 is configured to detect a pre-stored state parameter of the second MCU, in which the pre-stored state parameter of the second MCU is determined according to a first state updating message sent by the second MCU.

The first determining unit 5012 is configured to determine that the second MCU is in the deep sleep state, if the pre-stored state parameter of the second MCU indicates the deep sleep state.

As shown in Fig. 6, the determining 501 includes a sending unit 5013 and a second determining unit 5014.

The sending unit 5013 is configured to send a detecting message to the second MCU via a communication interface between the first MCU and the second MCU.

The second determining unit 5014 is configured to determine that the second MCU is in the deep sleep state, if no response message returned from the second MCU is received within a preset period.

As shown in Fig. 5, the device may further include a receiving module 503 and a transmitting module 504.

The receiving module 503 is configured to receive a second state updating message sent by the second MCU, in which a state parameter carried in the second state updating message indicates a working state.

The transmitting module 504 is configured to determine that the second MCU has been woken up according to the second state updating message, and to transmit data to the second MCU via a communication interface between the first MCU and the second MCU.

As shown in Fig. 5, the device may further include an updating module 505.

The updating module 505 is configured to update the pre-stored state parameter of the second MCU according to the state parameter carried in the second state updating message.

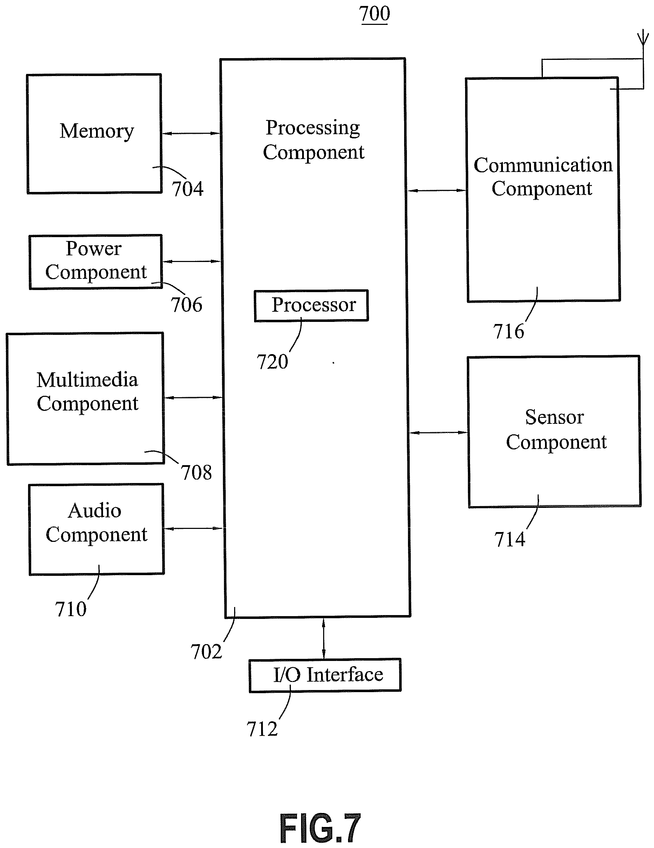

Corresponding to the device for waking up a MCU provided in the above exemplary embodiment of the present disclosure, an intelligent device 700 is provided in another exemplary embodiment of the present disclosure, as shown in Fig. 7. For example, the intelligent device 700 may be a mobile phone, a computer, a digital broadcasting terminal, a messaging device, a game console, a tablet device, fitness equipment, a Personal Digital Assistant PDA, and a terminal etc. Alternatively, the intelligent device 700 may also be an intelligent router, an intelligent air purifier, an intelligent water purifier, and an intelligent camera, etc.

Referring to Fig. 7, the intelligent device 700 may include the following one or more components: a processing component 702, a memory 704, a power component 706, a multimedia component 708, an audio component 710, an Input/Output (I/O) interface 712, a sensor component 714, and a communication component 716.

The processing component 702 typically controls overall operations of the intelligent device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the intelligent device 700. Examples of such data include instructions for any applications or methods operated on the intelligent device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the intelligent device 700. The power component 706 may include a power management system, one or more power sources, and any other components associated with the generation, management, and distribution of power in the intelligent device 700.

The multimedia component 708 includes a screen providing an output interface between the intelligent device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 708 includes a front camera and/or a rear camera. The front camera and the rear camera may receive external multimedia data while the intelligent device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the intelligent device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface for the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the intelligent device 700 and relative positioning of components (e.g., the display and the keypad of the intelligent device 700). The sensor component 714 may also detect a change in position of the intelligent device 700 or of a component in the intelligent device 700, a presence or absence of user contact with the intelligent device 700, an orientation or an acceleration/deceleration of the intelligent device 700, and a change in temperature of the intelligent device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate wired or wireless communication between the intelligent device 700 and other devices. The intelligent device 700 can access a wireless network based on a communication standard, such as WIFI, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the intelligent device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 704 including instructions. The above instructions are executable by the processor 720 in the intelligent device 700, for performing the above-described methods. For example, the non-transitory computer-readable storage medium may be a ROM, a RAM, a CD-ROM, a magnetic tape, a floppy disc, an optical data storage device, and the like.

With embodiments of the present disclosure, by sending the wake-up signal to the second MCU via the wake-up pin connected between the first MCU and the second MCU, the MCU in the deep sleep state may be woken up by other MCUs through triggering an external interrupt event, without waiting for an inner interrupt event in the MCU under the deep sleep state, thus improving the efficiency of communication between MCUs and enhancing the performance of the intelligence device that functions with multiple MCUs cooperating with each other to carry out tasks.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for waking up a Microcontroller Unit MCU, the method comprising:
determining (101) whether a second MCU is in a deep sleep state, when a first MCU triggers a communication event of transmitting data to the second MCU; and
if the second MCU is in a deep sleep state, sending (102, 202, 303, 403) a wake-up signal to the second MCU via a wake-up pin connected between the first MCU and the second MCU, so as to wake up the second MCU;
said method being **characterized in that** determining (101) whether a second MCU is in a deep sleep state comprises:
detecting (2011, 301) a pre-stored state parameter of the second MCU, in which the pre-stored state parameter of the second MCU is determined according to a first state updating message sent by the second MCU; and if the pre-stored state parameter of the second MCU indicates a deep sleep state, determining (2012, 302) that the second MCU is in the deep sleep state;
or sending (2013, 401) a detecting message to the second MCU via a communication interface between the first MCU and the second MCU; and if no response message returned from the second MCU is received within a preset period, determining (2014, 402) that the second MCU is in a deep sleep state.

2. The method according to claim 1, wherein after sending (102, 202, 303, 403) a wake-up signal to the second MCU so as to wake up the second MCU, the method further comprises:
receiving (203, 304, 404) a second state updating message sent by the second MCU, in which a state parameter carried in the second state updating message indicates a working state; and
determining (204, 305, 405) that the second MCU has been woken up according to the second state updating message, and transmitting data to the second MCU via a communication interface between the first MCU and the second MCU.

3. The method according to claim 2, wherein after receiving (203, 304) a second state updating message sent by the second MCU, the method further comprises:
updating (205, 306) the pre-stored state parameter of the second MCU according to the state parameter carried in the second state updating message.

4. A device for waking up a Microcontroller Unit MCU, the device comprising:
a determining module (501), configured to determine whether a second MCU is in a deep sleep state, when a first MCU triggers a communication event of transmitting data to the second MCU; and
a wake-up module (502), configured to send a wake-up signal to the second MCU via a wake-up pin connected between the first MCU and the second MCU if the second MCU is in the deep sleep state, so as to wake up the second MCU;
the device being **characterized in that** the determining module (501) comprises:
a detecting unit (5011), configured to detect a pre-stored state parameter of the second MCU, in which the pre-stored state parameter of the second MCU is determined according to a first state updating message sent by the second MCU; and a first determining unit (5012), configured to determine that the second MCU is in a deep sleep state if the pre-stored state parameter of the second MCU indicates the deep sleep state;
or a sending unit (5013), configured to send a detecting message to the second MCU via a communication interface between the first MCU and the second MCU; and a second determining unit (5014), configured to determine that the second MCU is in a deep sleep state, if no response message returned from the second MCU is received within a preset period.

5. The device according to claim 4, further comprising:
a receiving module (503), configured to receive a second state updating message sent by the second MCU, in which a state parameter carried in the second state updating message indicates a working state; and
a transmitting module (504), configured to determine that the second MCU has been woken up according to the second state updating message, and to transmit data to the second MCU via a communication interface between the first MCU and the second MCU.

6. The device according to claim 5, further comprising:
an updating module (505), configured to update the pre-stored state parameter of the second MCU according to the state parameter carried in the second state updating message.

7. A computer program including instructions for executing the steps of the method for waking up a Microcontroller Unit MCU according to any one of claims 1 to 3 when said program is executed by a computer.

8. A recording medium readable by a computer and having recorded thereon the computer program according to claim 7.

## Patentansprüche

1. Verfahren zum Aufwecken einer Mikrocontroller-Einheit MCU, wobei das Verfahren umfasst:
Bestimmen (101), ob eine zweite MCU in einem Tiefschlafzustand ist, wenn eine erste MCU ein Kommunikationsereignis des Übertragens von Daten an die zweite MCU auslöst, und
wenn die zweite MCU in einem Tiefschlafzustand ist, Senden (102, 202, 303, 403) eines Aufwecksignals an die zweite MCU mittels eines Wake-Up-Pins, der zwischen der ersten MCU und der zweiten MCU verbunden ist, um die zweite MCU aufzuwecken,
wobei das Verfahren **dadurch gekennzeichnet ist, dass** das Bestimmen (101), ob eine zweite MCU in einem Tiefschlafzustand ist, umfasst:
Erfassen (2011, 301) eines vorher gespeicherten Zustandsparameters der zweiten MCU, wobei der vorher gespeicherte Zustandsparameter der zweiten MCU gemäß einer ersten Zustandsaktualisierungsnachricht, die von der zweiten MCU gesendet wird, bestimmt wird, und wenn der vorher gespeicherte Zustandsparameter der zweiten MCU einen Tiefschlafzustand angibt, Bestimmen (2012, 302), dass die zweite MCU in dem Tiefschlafzustand ist,
oder Senden (2013, 401) einer Erfassungsnachricht an die zweite MCU mittels einer Kommunikationsschnittstelle zwischen der ersten MCU und der zweiten MCU, und wenn keine Antwortnachricht, die von der zweiten MCU zurückgesendet wird, innerhalb einer vorher eingestellten Zeitspanne empfangen wird, Bestimmen (2014, 402), dass die zweite MCU in einem Tiefschlafzustand ist.

2. Verfahren nach Anspruch 1, wobei nach dem Senden (102, 202, 303, 403) eines Aufwecksignals an die zweite MCU, um die zweite MCU aufzuwecken, das Verfahren ferner umfasst:
Empfangen (203, 304, 404) einer zweiten Zustandsaktualisierungsnachricht, die von der zweiten MCU gesendet wird, wobei ein Zustandsparameter, der in der zweiten Zustandsaktualisierungsnachricht getragen wird, einen Arbeitszustand angibt, und
Bestimmen (204, 305, 405) gemäß der zweiten Zustandsaktualisierungsnachricht, dass die zweite MCU aufgeweckt wurde, und Übertragen von Daten an die zweite MCU mittels einer Kommunikationsschnittstelle zwischen der ersten MCU und der zweiten MCU.

3. Verfahren nach Anspruch 2, wobei nach dem Empfangen (203, 304) einer zweiten Zustandsaktualisierungsnachricht, die von der zweiten MCU gesendet wird, das Verfahren ferner umfasst:
Aktualisieren (205, 306) des vorher gespeicherten Zustandsparameters der zweiten MCU gemäß dem Zustandsparameter, der in der zweiten Zustandsaktualisierungsnachricht getragen wird.

4. Vorrichtung zum Aufwecken einer Mikrocontroller-Einheit MCU, wobei die Vorrichtung umfasst:
ein Bestimmungsmodul (501), das dazu ausgestaltet ist, zu bestimmen, ob eine zweite MCU in einem Tiefschlafzustand ist, wenn eine erste MCU ein Kommunikationsereignis des Übertragens von Daten an die zweite MCU auslöst, und
ein Aufweckmodul (502), das dazu ausgestaltet ist, ein Aufwecksignal an die zweite MCU mittels eines Wake-Up-Pins, der zwischen der ersten MCU und der zweiten MCU verbunden ist, zu senden, wenn die zweite MCU in dem Tiefschlafzustand ist, um die zweite MCU aufzuwecken,
wobei die Vorrichtung **dadurch gekennzeichnet ist, dass** das Bestimmungsmodul (501) umfasst:
eine Erfassungseinheit (5011), die dazu ausgestaltet ist, einen vorher gespeicherten Zustandsparameter der zweiten MCU zu erfassen, wobei der vorher gespeicherte Zustandsparameter der zweiten MCU gemäß einer ersten Zustandsaktualisierungsnachricht, die von der zweiten MCU gesendet wird, bestimmt wird, und eine erste Bestimmungseinheit (5012), die dazu ausgestaltet ist, zu bestimmen, dass die zweite MCU in einem Tiefschlafzustand ist, wenn der vorher gespeicherte Zustandsparameter der zweiten MCU den Tiefschlafzustand angibt,
oder eine Sendeeinheit (5013), die dazu ausgestaltet ist, eine Erfassungsnachricht an die zweite MCU mittels einer Kommunikationsschnittstelle zwischen der ersten MCU und der zweiten MCU zu senden, und eine zweite Bestimmungseinheit (5014), die dazu ausgestaltet ist, zu bestimmen, dass die zweite MCU in einem Tiefschlafzustand ist, wenn keine Antwortnachricht, die von der zweiten MCU zurückgesendet wird, innerhalb einer vorher eingestellten Zeitspanne empfangen wird.

5. Vorrichtung nach Anspruch 4, ferner umfassend:
ein Empfangsmodul (503), das dazu ausgestaltet ist, eine zweite Zustandsaktualisierungsnachricht, die von der zweiten MCU gesendet wird, zu empfangen, wobei ein Zustandsparameter, der in der zweiten Zustandsaktualisierungsnachricht getragen wird, einen Arbeitszustand angibt, und
ein Übertragungsmodul (504), das dazu ausgestaltet ist, gemäß der zweiten Zustandsaktualisierungsnachricht zu bestimmen, dass die zweite MCU aufgeweckt wurde, und Daten an die zweite MCU mittels einer Kommunikationsschnittstelle zwischen der ersten MCU und der zweiten MCU zu übertragen.

6. Vorrichtung nach Anspruch 5, ferner umfassend:
ein Aktualisierungsmodul (505), das dazu ausgestaltet ist, den vorher gespeicherten Zustandsparameter der zweiten MCU gemäß dem Zustandsparameter, der in der zweiten Zustandsaktualisierungsnachricht getragen wird, zu aktualisieren.

7. Computerprogramm, das Anweisungen zum Ausführen der Schritte des Verfahrens zum Aufwecken einer Mikrocontroller-Einheit MCU nach einem der Ansprüche 1 bis 3, wenn das Programm von einem Computer ausgeführt wird, beinhaltet.

8. Aufzeichnungsmedium, das von einem Computer lesbar ist und auf dem das Computerprogramm nach Anspruch 7 aufgezeichnet ist.

## Revendications

1. Procédé pour réveiller une unité de microcontrôleur, MCU, le procédé comprenant les étapes ci-dessous consistant à :
déterminer (101) si une seconde unité MCU est dans un état de sommeil profond, lorsqu'une première unité MCU déclenche un événement de communication de transmission de données à la seconde unité MCU ; et
si la seconde unité MCU est dans un état de sommeil profond, envoyer (102, 202, 303, 403) un signal de réveil à la seconde unité MCU, par l'intermédiaire d'une broche de réveil connectée entre la première unité MCU et la seconde unité MCU, de manière à réveiller la seconde unité MCU ;
ledit procédé étant **caractérisé en ce que** l'étape consistant à déterminer (101) si une seconde unité MCU est dans un état de sommeil profond comprend les étapes ci-dessous consistant à :
détecter (2011, 301) un paramètre d'état pré-stocké de la seconde unité MCU, dans lequel le paramètre d'état pré-stocké de la seconde unité MCU est déterminé selon un premier message de mise à jour d'état envoyé par la seconde unité MCU ; et si le paramètre d'état pré-stocké de la seconde unité MCU indique un état de sommeil profond, déterminer (2012, 302) que la seconde unité MCU est dans l'état de sommeil profond ; ou
envoyer (2013, 401) un message de détection à la seconde unité MCU, par l'intermédiaire d'une interface de communication entre la première unité MCU et la seconde unité MCU ; et si aucun message de réponse renvoyé par la seconde unité MCU n'est reçu au cours d'une période prédéfinie, déterminer (2014, 402) que la seconde unité MCU est dans un état de sommeil profond.

2. Procédé selon la revendication 1, dans lequel, après l'étape d'envoi (102, 202, 303, 403) d'un signal de réveil à la seconde unité MCU de manière à réveiller la seconde unité MCU, le procédé comprend en outre les étapes ci-dessous consistant à :
recevoir (203, 304, 404) un second message de mise à jour d'état envoyé par la seconde unité MCU, dans lequel un paramètre d'état porté dans le second message de mise à jour d'état indique un état de fonctionnement ; et
déterminer (204, 305, 405) que la seconde unité MCU a été réveillée selon le second message de mise à jour d'état, et transmettre des données à la seconde unité MCU, par l'intermédiaire d'une interface de communication entre la première unité MCU et la seconde unité MCU.

3. Procédé selon la revendication 2, dans lequel, après l'étape de réception (203, 304) d'un second message de mise à jour d'état envoyé par la seconde unité MCU, le procédé comprend en outre l'étape ci-dessous consistant à :
mettre à jour (205, 306) le paramètre d'état pré-stocké de la seconde unité MCU selon le paramètre d'état porté dans le second message de mise à jour d'état.

4. Dispositif destiné à réveiller une unité de microcontrôleur, MCU, le dispositif comprenant :
un module de détermination (501), configuré de manière à déterminer si une seconde unité MCU est dans un état de sommeil profond, lorsqu'une première unité MCU déclenche un événement de communication de transmission de données à la seconde unité MCU ; et
un module de réveil (502), configuré de manière à envoyer un signal de réveil à la seconde unité MCU, par l'intermédiaire d'une broche de réveil connectée entre la première unité MCU et la seconde unité MCU, si la seconde unité MCU est dans l'état de sommeil profond, de manière à réveiller la seconde unité MCU ;
le dispositif étant **caractérisé en ce que** le module de détermination (501) comprend :
une unité de détection (5011), configurée de manière à détecter un paramètre d'état pré-stocké de la seconde unité MCU, dans lequel le paramètre d'état pré-stocké de la seconde unité MCU est déterminé selon un premier message de mise à jour d'état envoyé par la seconde unité MCU ; et une première unité de détermination (5012), configurée de manière à déterminer que la seconde unité MCU est dans un état de sommeil profond, si le paramètre d'état pré-stocké de la seconde unité MCU indique l'état de sommeil profond ; ou
une unité d'envoi (5013), configurée de manière à envoyer un message de détection à la seconde unité MCU, par l'intermédiaire d'une interface de communication entre la première unité MCU et la seconde unité MCU ; et une seconde unité de détermination (5014), configurée de manière à déterminer que la seconde unité MCU est dans un état de sommeil profond, si aucun message de réponse renvoyé par la seconde unité MCU n'est reçu au cours d'une période prédéfinie.

5. Dispositif selon la revendication 4, comprenant en outre :
un module de réception (503), configuré de manière à recevoir un second message de mise à jour d'état envoyé par la seconde unité MCU, dans lequel un paramètre d'état porté dans le second message de mise à jour d'état indique un état de fonctionnement ; et
un module de transmission (504), configuré de manière à déterminer que la seconde unité MCU a été réveillée selon le second message de mise à jour d'état, et à transmettre des données à la seconde unité MCU, par l'intermédiaire d'une interface de communication entre la première unité MCU et la seconde unité MCU.

6. Dispositif selon la revendication 5, comprenant en outre :
un module de mise à jour (505), configuré de manière à mettre à jour le paramètre d'état pré-stocké de la seconde unité MCU, selon le paramètre d'état transmis dans le second message de mise à jour d'état.

7. Programme informatique incluant des instructions pour exécuter les étapes du procédé de réveil d'une unité de microcontrôleur, MCU, selon l'une quelconque des revendications 1 à 3, lorsque ledit programme est exécuté par un ordinateur.

8. Support d'enregistrement lisible par un ordinateur et sur lequel est enregistré le programme informatique selon la revendication 7.
